# NEUE EUROPÄISCHE PATENTSCHRIFT

(11) **EP 3 594 531 B2**
(45) Veröffentlichungstag und Bekanntmachung des Hinweises auf die Entscheidung über den Einspruch: **07.08.2024**
(45) Hinweis auf die Patenterteilung: 09.06.2021
(21) Anmeldenummer: 19182468.9
(22) Anmeldetag: 26.06.2019
(51) Int. Cl.: B62J 45/40, B62M 9/12, B62J 31/00

(54) **SENSORSYSTEM DES KETTENZUSTANDS EINES FAHRRADS**
BICYCLE SENSOR SYSTEM OF THE CHAIN CONDITION
SYSTÈME DE DÉTECTION DE L'ÉTAT DE LA CHAÎNE D'UNE BICYCLETTE

(30) Priorität: 13.07.2018 DE 102018211729
(43) Veröffentlichungstag der Anmeldung: 15.01.2020
(73) Patentinhaber: Robert Bosch GmbH, 70442 Stuttgart (DE)
(72) Erfinder: Schlechter, Thomas, 5201 Seekirchen Am Wallersee (AT); Fischer, Johannes, 72124 Pliezhausen (DE); Heins, Pia, 70176 Stuttgart (DE)

(56) Entgegenhaltungen:
- CN-U- 202 557 683
- CN-U- 206 288 131
- DE-A1- 102007 051 261
- DE-A1- 102011 077 181
- DE-A1- 102015 120 590
- DE-A1- 19 826 220
- US-A1- 2014 123 760
- US-A1- 2014 124 336
- US-A1- 2016 288 877
- US-B2- 7 100 742
- US-B2- 9 514 576
- JONES C CALVIN: "Big Blue Book of Bicycle Repair", PARK TOOL COMPANY, 1 January 2005 (2005-01-01), pages 1 - 9, XP055903874
- SEPPANEN ALEKSI: "Utilizing acoustic measurements in equipment condition monitoring", THESIS, 23 May 2016 (2016-05-23), pages 1 - 74, XP055903933
- DELVECCHIO S.; BONFIGLIO P.; POMPOLI F.: "Vibro-acoustic condition monitoring of Internal Combustion Engines: A critical review of existing techniques", MECHANICAL SYSTEMS AND SIGNAL PROCESSING, ELSEVIER, AMSTERDAM, NL, vol. 99, 1 January 1900 (1900-01-01), AMSTERDAM, NL, pages 661 - 683, XP085152107, ISSN: 0888-3270, DOI: 10.1016/j.ymssp.2017.06.033
- DA FONSECA CACADOR FILIPE MANUEL: "Bicycle drivetrain noise and vibration test development", THESIS, 1 July 2016 (2016-07-01), pages 1 - 75, XP055903947
- ROBERTO PALAZZETTI, YAN XIU-TIAN: "Study on lubrication effect on motorbike chain transmissions", INDUSTRIAL LUBRICATION AND TRIBOLOGY, PETERSON PUBLISHING, DROITWICH, GB, vol. 68, no. 5, 8 August 2016 (2016-08-08), GB, pages 561 - 568, XP055436249, ISSN: 0036-8792, DOI: 10.1108/ILT-10-2015-0142
- SOPOUCH MARTIN, HELLINGER W., PRIEBSCH H. H.: "Prediction of vibroacoustic excitation due to the timing chains of reciprocating engines", PROCEEDINGS OF THE INSTITUTION OF MECHANICAL ENGINEERS, PART K: JOURNAL OF MULTI-BODY DYNAMICS, vol. 217, no. 3, 1 September 2003 (2003-09-01), pages 225 - 240, XP055903954

## Beschreibung

### Stand der Technik

Die vorliegende Erfindung betrifft ein Sensorsystem eines Fahrrads. Außerdem betrifft die Erfindung ein Fahrrad umfassend ein derartiges Sensorsystem. Mit dem Sensorsystem ist insbesondere ermöglicht, anormale Betriebszustände einer Antriebskette eines Fahrrads festzustellen.

Aus dem Stand der Technik sind Fahrräder bekannt. Bei diesen werden üblicherweise Antriebsketten verwendet, um eine Kraft von einer von einem Benutzer zu bedienenden Pedalvorrichtung auf ein Hinterrad zu übertragen. Um ein Übersetzungsverhältnis zwischen Pedalvorrichtung und Hinterrad zu wählen, ist die Antriebskette üblicherweise auf verschiedene Zahnkränze schaltbar. Zumeist sind an dem Hinterrad und/oder an der Pedalvorrichtung mehrere Zahnkränze vorhanden, wobei vor allem an dem Hinterrad diese Zahnkränze zu einer Zahnkranzkassette zusammengefasst sind.

Die Antriebskette kann jedoch einen anormalen Betrieb aufweisen, in dem die Antriebskette einem erhöhten Verschleiß unterliegt. Ein solcher Betrieb ist insbesondere dann gegeben, wenn zu hohe laterale Kräfte auf die Kette wirken. Dies ist gegeben, wenn die Antriebskette eine zu große Schrägstellung zwischen dem Zahnkranz an der Pedalvorrichtung und dem Zahnkranz an dem Hinterrad aufweist. In diesem Fall ist eine große Biegung vorhanden, die an den Stellen auftritt, an denen die Antriebskette die Zahnkränze verlässt. Eine solche Biegung führt zu einem erhöhten Verschleiß. Andere Fälle eines anormalen Betriebs sind insbesondere dann gegeben, wenn die Antriebskette verschmutzt ist oder ein Ölbenutzungsgrad der Antriebskette zu gering ist oder Zahnkränze abgenutzt sind.

Als Beispiel wird in Dokument DE 10 2011 077181 ein Sensorsystem offenbart, womit der Kettenzustand erkannt wird um einen anormalen Betrieb der Kette zu entdecken.

### Offenbarung der Erfindung

Das erfindungsgemäße Sensorsystem ermöglicht ein akustisches Überwachen der Antriebskette. Ein anormaler Betrieb der Antriebskette führt zu charakteristischen Geräuschemissionen. Diese können durch das Sensorsystem erfasst und zugeordnet werden. Somit ist eine Möglichkeit gegeben, anormale Betriebszustände der Antriebskette zu erfassen und einen Benutzer des Fahrrads gegebenenfalls zu warnen.

Das erfindungsgemäße Sensorsystem eines Fahrrads umfasst einen Schallsensor sowie ein Steuergerät. Der Schallsensor ist ausgebildet, Schall von einer Antriebskette des Fahrrads aufzunehmen. Das Steuergerät ist eingerichtet, anhand eines Vergleichs von Schallsignalen Daten des Schallsensors mit vordefinierten Schallsignalen zwischen einem normalen Betrieb und einem anormalen Betrieb der Antriebskette zu unterscheiden. Wird die Antriebskette in dem anormalen Betrieb verwendet, so verschleißt die Antriebskette stärker als in dem Fall, wenn die Antriebskette in dem normalen Betrieb verwendet wird. Wird das Fahrrad über längere Zeit mit der Antriebskette in dem anormalen Betrieb benutzt, so ist ein erhöhter Verschleiß der Antriebskette zu erwarten. Es ist somit insbesondere vorgesehen, dass zumindest ein anormaler Betriebszustand, insbesondere eine Vielzahl von anormalen Betriebszuständen, charakterisiert und dem Steuergerät gespeichert sind. Das Steuergerät kann somit anhand des Schallsensors die anormalen Betriebszustände der Antriebskette erkennen. Anormale Betriebszustände sind stets mit einer charakteristischen Geräuschemission verbunden, die insbesondere das vermehrte Verschleißen der Antriebskette anzeigen. Somit kann anhand dieser Geräuschemission auf den anormalen Betrieb der Antriebskette rückgeschlossen werden. Der Schallsensor dient vorteilhafterweise zum Aufnehmen von Körperschall und ist besonders vorteilhaft als intelligenter Sensor ausgebildet. Somit lassen sich verschiedene Signalverarbeitungsschritte wie insbesondere eine Signalaufbereitung und/oder Signalverarbeitung und/oder Signalfilterung bereits in dem Schallsensor ausführen.

Es ist vorgesehen, dass die vordefinierten Schallsignaldaten solche Schallsignaldaten umfassen, die mittels des Schallsensors bei anormalem Betrieb der Antriebskette aufgenommen wurden. Dies bedeutet, dass gezielt anormale Betriebszustände der Antriebskette vorgesehen werden, wobei der durch diesen anormalen Betrieb erzeugte Schall von dem Schallsensor aufgenommen wird. Es werden charakteristische Merkmale solcher Schallsignaldaten verwendet, die mittels des Schallsensors bei anormalem Betrieb aufgenommen wurden. Bei solchen charakteristischen Merkmalen handelt es sich um Mel-Frequenz-Cepstrum-Koeffizienten. Somit ist ermöglicht, dass einmalig anormale Betriebszustände charakterisiert werden, wobei in dem Steuergerät die gespeicherten Schallsignaldaten oder die charakteristischen Merkmale der Schallsignaldaten für eine Vielzahl von Sensorsystemen verwendet werden kann. Damit lässt sich das Sensorsystem auf einfache Art und Weise trainieren. Ebenso lässt sich die Möglichkeit des Sensorsystems, anormale Betriebszustände zu erkennen, erweitern, indem neue Schallsignaldaten oder charakteristische Merkmale von Schallsignaldaten von weiteren anormalen Betriebszuständen hinzugefügt werden.

Die Unteransprüche haben bevorzugte Weiterbildungen der Erfindung zum Inhalt.

Bevorzugt ist vorgesehen, dass in dem Steuergerät eine Vielzahl von vordefinierten Schallsignaldaten gespeichert ist. Jeder vordefinierte Signaldatensatz charakterisiert dabei bevorzugt einen spezifischen anormalen Betriebszustand. Es ist vorgesehen, dass mehrere Sätze dieser vordefinierten Schallsignaldaten in einer Datenbank und/oder Look-Up-Tabelle gespeichert sind, wobei jeder Satz vordefinierter Schallsignaldaten einem unterschiedlichen anormalen Betriebszustand der Antriebskette entspricht. Auf diese Weise ist ein Charakterisieren des anormalen Betriebs ermöglicht. Es ist dazu lediglich notwendig, die von dem Schallsensor ermittelten Schallsignaldaten mit den in der Datenbank oder der Look-Up-Tabelle gespeicherten Schallsignaldaten zu vergleichen. Anhand eines solchen Vergleichs lässt sich derjenige Umstand identifizieren, der zu dem anormalen Betrieb der Antriebskette führt. Dem Benutzer des Fahrrads kann damit eine zielgerichtete Warnung und/oder Empfehlung ausgegeben werden, die auf den genauen Umstand der Antriebskette hinweist, die zu dem anormalen Betrieb führt. Insbesondere lassen sich auch solche Fälle erfassen, bei denen sich mehrere anormale Betriebszustände überlagern. Dies ist insbesondere derart möglich, dass für spezifische Kombinationen von anormalen Betriebszuständen charakteristische Schallsignaldaten vordefinierten und gespeichert sind. Somit kann direkt erkannt werden, ob mehrere anormale Betriebszustände gleichzeitig vorliegen. Auch kann mittels Signalverarbeitung aus dem Schallsignal des Schallsensors die charakteristischen Schallsignaldaten ausgefiltert werden, um die überlagerten anormalen Betriebszustände zu erkennen. Während die erstere Methode lediglich geringen Rechenaufwand, dafür aber einen größeren Speicher zum Speichern einer größeren Anzahl von vordefinierten Schallsignaldaten benötigt, ist für die letztere Methode ein kleinerer Speicher, dafür aber ein erhöhter Rechenaufwand zur Filterung des Schallsignals des Schallsensors notwendig.

Der Schallsensor kann vorteilhafterweise eine kabelgebundene oder alternativ eine kabellose Verbindung mit dem Steuergerät zur Datenübertragung und/oder Energieversorgung aufweisen. Der Schallsensor kann insbesondere eine autarke Energieversorgung aufweisen, indem der Schallsensor insbesondere mit einer eigenen Batterie versehen ist. Alternativ kann eine Energieversorgung auch kabellos über das Steuergerät erfolgen, wie dies aus dem Stand der Technik, beispielsweise für RFID-Systeme, bekannt ist. Gleiches gilt für die Datenübertragung. Auch hier kann insbesondere eine Funk-Signaldatenübertragung erfolgen. Besonders vorteilhaft ist sowohl die Datenübertragung als auch die Energieversorgung kabellos ausgebildet, so dass der Schallsensor als autarkes Element an einer unterschiedlichen Position bezüglich des Steuergeräts angebracht werden kann. Somit ist ein einfacher Aufbau und ein wartungsfreier Betrieb des Sensorsystems ermöglicht.

Der Schallsensor ist insbesondere ein Körperschallsensor. Der Körperschallsensor lässt sich optimaler Weise in der Nähe der Schallquelle, d.h. der Antriebskette, anbringen. Durch die Verwendung eines Körperschallsensors sind insbesondere Aufnahmen von Störgeräuschen aus der Umgebung, wie dies bei einem Luftschallsensor der Fall wäre, vermieden. Somit ist eine Signalverarbeitung von Signalen des Schallsensors vereinfacht. Damit lassen sich anormalen Betriebszustände der Antriebskette einfach und aufwandsarm, dabei gleichzeitig aber sehr zuverlässig, ermitteln.

Die Erfindung betrifft außerdem ein Fahrrad. Das Fahrrad umfasst ein Sensorsystem wie zuvor beschrieben. Dabei ist vorgesehen, dass der Schallsensor des Sensorsystems an einer Pedalvorrichtung des Fahrrads angebracht ist. Insbesondere ist der Schallsensor vorteilhafterweise an einer Nabe der Pedalvorrichtung angebracht. Die Pedalvorrichtung umfasst dabei zumeist zwei Pedale, die von dem Benutzer des Fahrrads zu betätigen sind, um das Fahrrad anzutreiben. In einer alternativen Ausgestaltung kann der Schallsensor auch an einem Rahmen des Fahrrads angebracht sein. Besonders vorteilhaft ist vorgesehen, dass der Schallsensor an einem Element des Fahrrads angebracht ist, das fest mit einem Zahnkranz, in dem die Antriebskette läuft, gekoppelt ist. In diesem Fall ist ermöglicht, dass Geräusche der Antriebskette sicher und zuverlässig aufgenommen werden können.

Das Fahrrad weist bevorzugt zumindest einen hinteren Zahnkranz auf, der an einem Hinterrad des Fahrrads angebracht ist. Der hintere Zahnkranz ist bevorzugt Teil einer Zahnkranzkassette. Alternativ oder zusätzlich weist das Fahrrad bevorzugt zumindest einen vorderen Zahnkranz auf, der an einer Pedalvorrichtung angebracht ist. Der vordere Zahnkranz ist insbesondere Teil einer Zahnkranzanordnung. Die Antriebskette verläuft zwischen dem einem der hinteren Zahnkränze und einem der vorderen Zahnkränze. Anstatt mehrerer hinterer Zahnkränze bzw. einer Zahnkranzkassette oder anstatt mehrerer vorderer Zahnkränze kann insbesondere auch ein einzelner, singulärer Zahnkranz vorgesehen sein. Sind mehrere Zahnkränze vorhanden, so ist vorgesehen, dass die Antriebskette zwischen einem hinteren Zahnkranz der hinteren Zahnkranzkassette und einem vorderen Zahnkranz der mehreren vorderen Zahnkränze verläuft. Der anormale Betrieb der Antriebskette entspricht in diesem Fall einem Zustand der Antriebskette, bei dem die Antriebskette zwischen einem solchen vorderen Zahnkranz und einem solchen hinteren Zahnkranz verläuft, die einen Abstand in Querrichtung des Fahrrads aufweisen, der oberhalb eines vordefinierten Grenzwerts liegt. Somit verläuft die Antriebskette in Längsrichtung des Fahrrads nicht entlang einer Geraden, sondern ist zwischen dem vorderen Zahnkranz und dem hinteren Zahnkranz verschränkt, sodass die Antriebskette zwischen dem vorderen Zahnkranz und dem hinteren Zahnkranz schräg zur Querrichtung verläuft. Ist diese Schrägstellung zu groß, d.h. ist der Abstand zwischen dem für die Antriebskette verwendeten vorderen Zahnkranz und hinteren Zahnkranz in Querrichtung des Fahrrads zu groß, so tritt der anormale Betrieb auf. Dies lässt sich, wie zuvor beschrieben, anhand des charakteristischen Geräuschs der Antriebskette in einem solchen Zustand durch den Schallsensor detektieren.

Das Steuergerät ist vorteilhafterweise eingerichtet, einen Schalteingriff vorzunehmen, um die Antriebskette auf einen solchen vorderen Zahnkranz und/oder auf einen solchen hinteren Zahnkranz zu überführen, so dass der Abstand in Querrichtung verringert ist. Dies bedeutet, dass der anormale Betrieb der Antriebskette des Fahrrads durch einen aktiven Schalteingriff des Steuergeräts beendet werden kann. Optimalerweise wird dabei ein Übersetzungsverhältnis zwischen vorderem Zahnkranz und hinterem Zahnkranz gewählt, das dem von dem Benutzer gewünschten Übersetzungsverhältnis entspricht. Somit ist der Schalteingriff für den Benutzer nahezu nicht wahrnehmbar.

Bevorzugt ist weiterhin vorgesehen, dass der anormale Betrieb einen Zustand der Antriebskette umfasst, bei dem ein Schmiermittelbenutzungsgrad der Antriebskette unterhalb eines vordefinierten Grads liegt. Auch ist vorgesehen, dass der anormale Betrieb einen Zustand der Antriebskette umfasst, bei dem die Antriebskette einen Verschmutzungsgrad aufweist, der oberhalb eines vordefinierten Grads liegt. Wird die Antriebskette in diesen Fällen betrieben, so verschleißt die Antriebskette vermehrt im Vergleich zu dem Fall einer nicht verschmutzten und/oder korrekt geschmierten Antriebskette. Weiterhin weisen solche Fälle Schallemissionen auf, die charakteristisch für den jeweiligen Zustand der Antriebskette sind. Somit lässt sich auch jeder dieser beschriebenen anormalen Betriebszustände der Antriebskette durch das Sensorsystem erkennen, so dass eine entsprechende Warnung an den Benutzer des Fahrrads ausgegeben werden kann.

Das Fahrrad weist in einer weiteren bevorzugten Ausführungsform eine Ausgabevorrichtung auf. Das Steuergerät ist bevorzugt eingerichtet, eine optische und/oder haptische und/oder akustische Warnung auszugeben, wenn ein anormaler Betrieb detektiert ist. Besonders bevorzugt werden außerdem Handlungsempfehlungen ausgegeben, die den Benutzer veranlassen sollen, eine gewisse Handlung auszuführen. Dies kann insbesondere eine Schaltempfehlung und/oder ein Hinweis sein, dass die Antriebskette gereinigt oder geschmiert werden sollte. Bei der Ausgabevorrichtung kann es sich bevorzugt um eine Displayanzeige handeln. Ebenso kann es sich bei der Ausgabevorrichtung um eine Schnittstelle zu einem externen Gerät, insbesondere zu einem Smartphone, handeln.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht eines Fahrrads gemäß einem Ausführungsbeispiel der Erfindung,
- Figur 2a: eine schematische Darstellung eines Sensorsystems gemäß einem ersten Ausführungsbeispiel der Erfindung,
- Figur 2b: eine schematische Darstellung eines Sensorsystems gemäß einem zweiten Ausführungsbeispiel der Erfindung, und
- Figur 3: eine schematische Darstellung eines anormalen Betriebs einer Antriebskette des Fahrrads gemäß dem Ausführungsbeispiel der Erfindung.

### Ausführungsformen der Erfindung

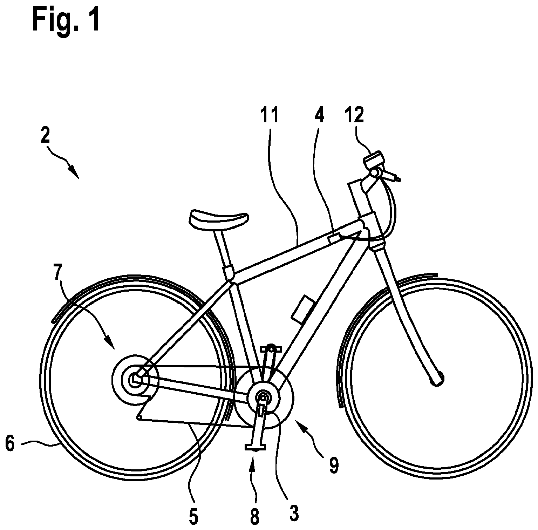

Figur 1 zeigt schematisch ein Fahrrad 2 gemäß einem Ausführungsbeispiel der Erfindung.

Das Fahrrad 2 umfasst eine Pedalvorrichtung 8 mit einer vorderen Zahnkranzanordnung 9, die mehrere Zahnkränze aufweist. Außerdem umfasst das Fahrrad 2 ein Hinterrad 6 mit einer hinteren Zahnkranzkassette 7, die ebenfalls mehrere Zahnkränze aufweist. Über einen Rahmen 11 sind Hinterrad 6 und Pedalvorrichtung 8 gekoppelt. Eine Antriebskette 5 verläuft zwischen einem hinteren Zahnkranz 7a der hinteren Zahnkranzkassette 7 und einem vorderen Zahnkranz 9a der vorderen Zahnkranzanordnung 9. Diese Antriebskette 5 dient zur Kraftübertragung zwischen der Pedalvorrichtung 8 und dem Hinterrad 6 und dient somit zur Kraftübertragung der Muskelkraft des Benutzers des Fahrrads 2 auf das Hinterrad 6.

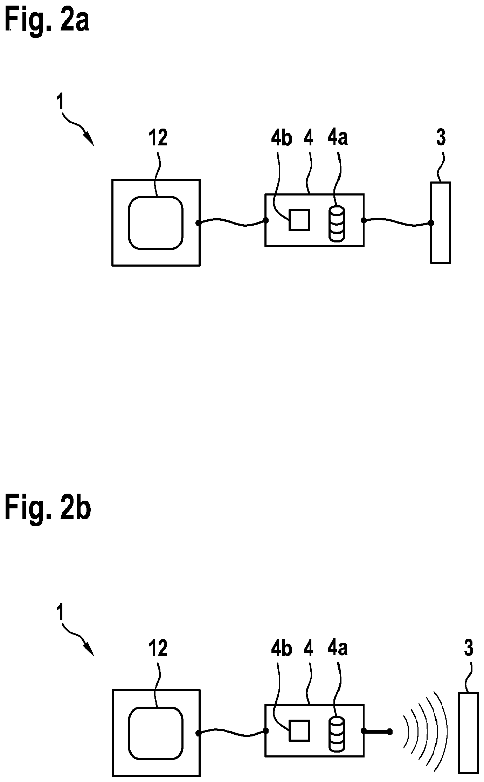

In einem normalen Betrieb ist ein Verschleiß der Antriebskette 5 minimiert. Allerdings können anormale Betriebszustände auftreten, bei denen die Antriebskette 5 vermehrt verschleißt. Wird die Antriebskette 5 über längere Zeiträume in dem anormalen Betriebszustand verwendet, so ist gegenüber demselben Zeitraum mit normalem Betriebszustand der Antriebskette 5 mit einem höheren Verschleiß zu rechnen. Um solche anormale Betriebszustände zu erkennen, weist das Fahrrad 2 ein Sensorsystem 1 wie in Figur 2 gezeigt auf.

Figur 2 zeigt zwei Alternativen des Sensorsystems 1, wobei Figur 2a eine erste Ausführungsform und Figur 2b eine zweite Ausführungsform des Sensorsystems 1 darstellt. Das Sensorsystem 1 umfasst in beiden Ausführungsbeispielen einen Schallsensor 3 und ein Steuergerät 4. Der Schallsensor 3 ist insbesondere ein Körperschallsensor und kann an der Pedalvorrichtung 8 oder an dem Rahmen 11 des Fahrrads 2 angebracht werden. Das Steuergerät 4 ist optimalerweise an dem Rahmen 11 des Fahrrads 2 anbringbar. Außerdem ist das Sensorsystem 1 mit einer Ausgabevorrichtung 12 koppelbar, um Warnungen und/oder Empfehlungen an den Benutzer des Fahrrads 2 auszugeben. Bei der Ausgabevorrichtung 12 kann es sich insbesondere um ein Display und/oder um einen Lautsprecher und/oder um eine haptische Ausgabe und/oder um eine Schnittstelle zu einem weiteren Endgerät, beispielsweise einem Smartphone, handeln.

In beiden Ausführungsbeispielen weist das Steuergerät 4 einen Speicher 4a und eine Analyseeinheit 4b auf. Der Speicher 4a dient zum Speichern vordefinierter Schallsignaldaten. Ebenso können in dem Speicher 4a charakteristische Merkmal als vordefinierte Schallsignaldaten gespeichert werden, um einen Speicherplatzbedarf zu reduzieren. Bei den vordefinierten Schallsignaldaten handelt es sich um solche Schallsignaldaten, die mit dem Schallsensor 3 erfassbar sind, wenn ein anormaler Betrieb des Fahrrads 2, insbesondere der Antriebskette 5, vorliegt. Dies bedeutet, dass das Steuergerät 4, insbesondere mittels der Analyseeinheit 4b, die von dem Schallsensor 3 erfassten Schallsignale als Schallsignaldaten mit den vordefinierten Schallsignaldaten vergleicht. Ist eine Übereinstimmung vorhanden, so kann das Steuergerät 4 einen anormalen Betrieb der Antriebskette 5 erkennen.

Ein anormaler Betrieb der Antriebskette 5 kann durch verschiedene Zustände erreicht werden. So kann die Antriebskette 5 einen ungünstigen Verlauf zwischen der hinteren Zahnkranzkassette 7 und der vorderen Zahnkranzanordnung 9 aufweisen. Ebenso kann die Antriebskette 5 einen zu hohen Verschmutzungsgrad oder einen zu geringen Schmiermittelbenetzungsgrad aufweisen. Alle diese Zustände führen zu charakteristischen Geräuschemissionen, die von dem Schallsensor 3 erfassbar sind. Der Schallsensor 3 ist insbesondere als Körperschallsensor ausgebildet, um die Aufnahme von Störgeräuschen aus der Umgebung zu minimieren. Somit kann das Steuergerät 4 einfach und aufwandsarm die entsprechenden charakteristischen Schallsignale der Antriebskette 5 erfassen.

Um die vordefinierten Schallsignale in dem Speicher 4a zu speichern, ist insbesondere vorgesehen, dass eine einmalige Kalibrierung ausgeführt wird. Bei dieser kann der Schallsensor 3 einen bewusst herbeigeführten anormalen Zustand erfassen, in dem die emittierten Geräusche während dieses anormalen Betriebs erfasst werden. In dem Steuergerät 4 werden die zugehörigen Schallsignaldaten des Schallsensors 3 oder zumindest charakteristische Merkmale dieser Schallsignaldaten als vordefinierte Schallsignaldaten in dem Speicher 4a gespeichert. Dieser Kalibrierungsprozess kann einmalig für eine ganze Baureihe von Fahrrädern 2 vorgenommen werden, um die vordefinierten Schallsignaldaten in allen Steuergeräten der entsprechenden Baureihe zu speichern. Ebenso kann aber auch eine individuelle Kalibrierung für jedes Fahrrad einzeln vorgenommen werden, wobei dies insbesondere auch durch den Benutzer selbst initiiert werden kann.

In dem in Figur 2a gezeigten ersten Ausführungsbeispiel ist der Schallsensor 3 kabelgebunden ausgebildet. Somit ist eine Kabelverbindung zwischen Steuergerät 4 und Schallsensor 3 vorhanden. Die Kabelverbindung dient bevorzugt sowohl zum Übertragen von elektrischer Energie als auch zum Übertragen von Schallsignaldaten. Alternativ besteht die Möglichkeit, dass der Schallsensor 3 eine eigene Energieversorgung, beispielsweise in Form einer Batterie, aufweist, so dass lediglich Schallsignaldaten über die Kabelverbindung zwischen Steuergerät 4 und Schallsensor 3 zu übertragen sind.

In dem in Figur 2b gezeigten zweiten Ausführungsbeispiel ist der Schallsensor 3 kabellos ausgebildet. Eine Datenübertragung und/oder eine Energieübertragung erfolgen vorteilhafterweise kabellos. So ist insbesondere vorgesehen, dass eine Energieversorgung des Schallsensors 3 durch das Steuergerät 4 kabellos erfolgt. Dies ist insbesondere für RFID-Systeme aus dem Stand der Technik bekannt. Alternativ weist der Schallsensor 3 eine eigene Energieversorgung auf, beispielsweise in Form einer Batterie. Die Signalübertragung ist in jedem Fall kabellos vorgesehen. Somit ist in dem zweiten Ausführungsbeispiel keine aufwendige Verkabelung des Schallsensors 3 notwendig. Der Schallsensor 3 kann somit einfach und aufwandsarm an dem Fahrrad 2 platziert werden, wobei der Schallsensor 3 ein autarkes Element ist und somit an einer optimalen Position zum Erfassen der Schallemission der Antriebskette 5 angebracht werden kann, ohne dass Rücksicht auf eine evtl. Verkabelung genommen werden muss. Es sind aber auch andere Ausführungsvarianten möglich. So kann eine Stromversorgung des Schallsensors 3 auf unterschiedliche Arten erfolgen, insbesondere durch eine Batterie und/oder durch eine Solarzelle und/oder durch eine vorhandene Vibrationsenergie des Fahrrads 2 und/oder durch eine Temperaturdifferenz zweier Metalle und/oder durch andere Energiequellen. Auch kann der Schallsensor 3 insbesondere kabelgebunden an das Steuergerät 4 gekoppelt sein.

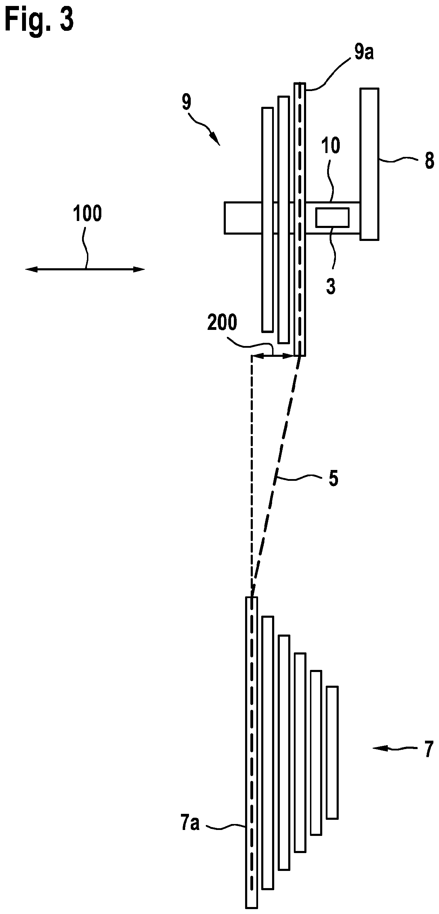

Figur 3 zeigt schematisch einen anormalen Betrieb der Antriebskette 5 aufgrund zu großer Schrägstellung der Antriebskette 5 zwischen der vorderen Zahnkranzanordnung 9 und der hinteren Zahnkranzkassette 7. So ist in Figur 3 beispielhaft gezeigt, dass die Antriebskette 5 jeweils auf einem größten vorderen Zahnkranz 9a der vorderen Zahnkranzanordnung 9 und einem größten hinteren Zahnkranz 7a der hinteren Zahnkranzkassette 7 angebracht ist. Dies führt dazu, dass die Antriebskette 5 eine maximale Schrägstellung aufweist, da der verwendete vordere Zahnkranz 9a und der verwendete hintere Zahnkranz 7a einen maximalen Abstand 200 in Querrichtung 100 des Fahrrads 2 aufweisen.

Es ist vorgesehen, dass ein maximaler Abstand in Querrichtung 100 vordefiniert ist, wobei der anormale Betrieb dann erkannt wird, wenn der tatsächliche Abstand 200 den maximalen Abstand überschreitet. Dieser Fall ist in Figur 3 gegeben.

Aufgrund des großen Abstands 200 ist die Antriebskette 5 zwischen dem vorderen Zahnkranz 9a und an dem hinteren Zahnkranz 7a verschränkt. Aufgrund dieser Verschränkung ist eine große laterale Belastung der Antriebskette 5 vorhanden, die dazu führt, dass die Antriebskette 5 vermehrt verschleißt. Gleichzeitig wird aufgrund der Verschränkung ein charakteristisches Geräusch emittiert.

Der Schallsensor 3 des Sensorsystems 1 ist vorteilhaftweise an einer Nabe 10 der Pedalvorrichtung 8 angebracht. Die Nabe 10 ist steif mit der vorderen Zahnkranzanordnung 9 verbunden, was eine Körperschallausbreitung begünstigt. Somit kann der Schallsensor 3 optimal den Schall aufnehmen, der von der Antriebskette 5 emittiert wird. Eine Aufnahme von Störgeräuschen ist gleichzeitig minimiert.

Es ist vorgesehen, dass das Steuergerät 4 die Schallsignaldaten des Schallsensors 3 mit den in dem Speicher 4a gespeicherten vordefinierten Schallsignaldaten vergleicht. In dem in Figur 3 gezeigten Fall wird das Steuergerät 4 feststellen, dass das Geräusch, das von dem Schallsensor 3 aufgenommen wurde, einem Datensatz in dem Speicher 4a entspricht, die Schallsignaldaten des Schallsensors 3 somit mit vordefinierten Schallsignaldaten übereinstimmen. Somit erkennt das Steuergerät 4 einen anormalen Zustand.

Das Steuergerät 4 kann entweder eine Warnung über die Ausgabevorrichtung 12 ausgeben und/oder kann einen aktiven Schalteingriff vornehmen, um den Abstand 200 zu verringern. Dies kann insbesondere durch eine Veränderung des vorderen Zahnkranzes 9a und/oder des hinteren Zahnkranzes 7a, auf dem die Antriebskette 5 verläuft, geschehen. Vorteilhafterweise wird durch den Schalteingriff nicht das Übersetzungsverhältnis geändert, das der Benutzer des Fahrrads eingestellt hat. Sollte dies nicht möglich sein, so wird das Übersetzungsverhältnis optimalerweise nur so gering wie möglich verändert. Somit hat der Schalteingriff für den Benutzer des Fahrrads 2 keine oder nahezu keine merklichen Folgen.

Sollte ein anormaler Betrieb durch einen zu großen Verschmutzungsgrad der Antriebskette 5 und/oder durch einen zu geringen Schmiermittelbenutzungsgrad der Antriebskette 5 erkannt werden, so werden vorteilhafterweise Handlungsempfehlungen an den Benutzer ausgegeben. Diese umfassen beispielsweise den Hinweis auf einer durchzuführenden Reinigung und/oder Wartung der Antriebskette 5.

Durch den Schallsensor ist einfach und aufwandsarm ermöglicht, anormale Zustände der Antriebskette 5 zu erkennen. Durch das Sensorsystem 1 lassen sich somit Hinweise oder aktive Eingriffe vornehmen, um einen anormalen Zustand der Antriebskette 5 schnellstmöglich zu beseitigen. Somit ist ein Verschleiß der Antriebskette 5 minimiert, wodurch die Lebensdauer der Antriebskette 5 und insbesondere auch der Zahnkranzkassette 7 und der Zahnkranzanordnung 9 verlängert ist.

## Patentansprüche

1. Sensorsystem (1) eines Fahrrads (2), umfassend einen Schallsensor (3) sowie ein Steuergerät (4), wobei der Schallsensor (3) ausgebildet ist, Schall von einer Antriebskette (5) des Fahrrads (2) aufzunehmen, und wobei das Steuergerät (4) eingerichtet ist, anhand eines Vergleichs von Schallsignaldaten des Schallsensors (3) mit vordefinierten Schallsignaldaten zwischen einem normalen Betrieb der Antriebskette (5) und einem anormalen Betrieb der Antriebskette (5), bei dem die Antriebskette (5) einem erhöhten Verschleiß unterliegt, zu unterscheiden, wobei die vordefinierten Schallsignaldaten zumindest ein charakteristisches Merkmal solcher Schallsignaldaten umfassen, die mittels des Schallsensors (3) bei anormalem Betrieb der Antriebskette (5) aufgenommen wurden, wobei die charakteristischen Merkmale Mel-Frequenz-Cepstrum-Koeffizienten sind.

2. Sensorsystem (1) eines Fahrrads (2) nach Anspruch 1, **dadurch gekennzeichnet, dass** in dem Steuergerät (4) mehrere Sätze vordefinierter Schallsignaldaten in einer Datenbank und/oder Look-Up-Tabelle gespeichert sind, wobei jeder Satz vordefinierter Schallsignaldaten einem unterschiedlichen Zustand der Antriebskette (5) entspricht, der zu einem anormalen Betrieb führt.

3. Sensorsystem (1) eines Fahrrads (2) nach einem der vorhergehenden Ansprüche, **dadurch gekennzeichnet, dass** der Schallsensor (3) eine kabelgebundene oder eine kabellose Verbindung mit dem Steuergerät (4) zur Datenübertragung und/oder Energieversorgung aufweist.

4. Sensorsystem (1) eines Fahrrads (2) nach einem der vorhergehenden Ansprüche, **dadurch gekennzeichnet, dass** der Schallsensor (3) ein Körperschallsensor ist.

5. Fahrrad (2) umfassend ein Sensorsystem (1) nach einem der vorhergehenden Ansprüche, wobei der Schallsensor (2) an einer Pedalvorrichtung (8), insbesondere an einer Nabe (10) der Pedalvorrichtung (8), oder an einem Rahmen (11) des Fahrrads (2) angebracht ist.

6. Fahrrad (2) nach Anspruch 5, **gekennzeichnet durch** eine an einem Hinterrad (6) des Fahrrads angeordnete hintere Zahnkranzkassette (7) mit zumindest einem Zahnkranz (7a) und/oder einer an einer Pedalvorrichtung (8) angeordnete vorderen Zahnkranzanordnung (9) mit zumindest einem Zahnkranz (9a), wobei die Antriebskette (5) zwischen einem hinteren Zahnkranz (7a) der hinteren Zahnkranzkassette (7) und einem vorderen Zahnkranz (9a) der vorderen Zahnkranzanordnung (9) verläuft, und wobei der anormale Betrieb einen Zustand der Antriebskette (5) umfasst, bei dem die Antriebskette (5) zwischen einem solchen vorderen Zahnkranz (9a) und einem solchen hinterem Zahnkranz (7a) verläuft, die einen Abstand (200) in Querrichtung (100) des Fahrrads (2) aufweisen, der oberhalb eines vordefinierten Grenzwerts liegt.

7. Fahrrad (2) nach Anspruch 6, **dadurch gekennzeichnet, dass** das Steuergerät (4) eingerichtet ist, einen Schalteingriff vorzunehmen, um die Antriebskette (5) auf einen solchen vorderen Zahnkranz (9a) und/oder hinteren Zahnkranz (7a) zu überführen, sodass der Abstand (200) in Querrichtung (100) verringert ist.

8. Fahrrad (2) nach einem der Ansprüche 5 bis 7, **dadurch gekennzeichnet, dass** der anormale Betrieb einen Zustand der Antriebskette (5) umfasst, bei dem eine Schmiermittelbenetzung der Antriebskette (5) unterhalb eines vordefinierten Grads und/oder eine Verschmutzung der Antriebskette (5) oberhalb eines vordefinierten Grads liegt.

9. Fahrrad (2) nach einem der Ansprüche 5 bis 8, **gekennzeichnet durch** eine Ausgabevorrichtung (12), wobei das Steuergerät (4) eingerichtet ist, eine optische und/oder haptische und/oder akustische Warnung auszugeben, wenn ein anormaler Betrieb detektiert ist.

## Claims

1. Sensor system (1) of a bicycle (2), comprising a sound sensor (3) and a control device (4), wherein the sound sensor (3) is designed to pick up sound from a drive chain (5) of the bicycle (2), and wherein the control device (4) is configured to distinguish between normal operation of the drive chain (5) and abnormal operation of the drive chain (5), in which the drive chain (5) is subject to increased wear, on the basis of a comparison of sound signal data from the sound sensor (3) with predefined sound signal data, wherein the predefined sound signal data comprise at least one characteristic feature of those sound signal data which were acquired by means of the sound sensor (3) during abnormal operation of the drive chain (5), wherein the characteristic features are mel-frequency cepstrum coefficients.

2. Sensor system (1) of a bicycle (2) according to Claim 1, **characterized in that** a plurality of sets of predefined sound signal data are stored in the control device (4) in a database and/or a lookup table, wherein each set of predefined sound signal data corresponds to a different state of the drive chain (5) which results in abnormal operation.

3. Sensor system (1) of a bicycle (2) according to one of the preceding claims, **characterized in that** the sound sensor (3) has a wired or wireless connection to the control device (4) for transmitting data and/or supplying energy.

4. Sensor system (1) of a bicycle (2) according to one of the preceding claims, **characterized in that** the sound sensor (3) is a structure-borne sound sensor.

5. Bicycle (2) comprising a sensor system (1) according to one of the preceding claims, wherein the sound sensor (2) is fitted to a pedal apparatus (8), in particular to a hub (10) of the pedal apparatus (8), or to a frame (11) of the bicycle (2).

6. Bicycle (2) according to Claim 5, **characterized by** a rear sprocket cassette (7) arranged on a rear wheel (6) of the bicycle and having at least one sprocket (7a) and/or a front sprocket arrangement (9) arranged on a pedal apparatus (8) and having at least one sprocket (9a), wherein the drive chain (5) runs between a rear sprocket (7a) of the rear sprocket cassette (7) and a front sprocket (9a) of the front sprocket arrangement (9), and wherein abnormal operation comprises a state of the drive chain (5) in which the drive chain (5) runs between such a front sprocket (9a) and such a rear sprocket (7a) which are at a distance (200) in the transverse direction (100) of the bicycle (2), which distance is above a predefined limit value.

7. Bicycle (2) according to Claim 6, **characterized in that** the control device (4) is configured to carry out a switching intervention in order to change the drive chain (5) to such a front sprocket (9a) and/or rear sprocket (7a), such that the distance (200) in the transverse direction (100) is reduced.

8. Bicycle (2) according to one of Claims 5 to 7, **characterized in that** abnormal operation comprises a state of the drive chain (5) in which lubricant wetting of the drive chain (5) is below a predefined degree and/or soiling of the drive chain (5) is above a predefined degree.

9. Bicycle (2) according to one of Claims 5 to 8, **characterized by** an output apparatus (12), wherein the control device (4) is configured to output an optical and/or haptic and/or acoustic warning when abnormal operation is detected.

## Revendications

1. Système de détection (1) d'une bicyclette (2), comprenant un capteur acoustique (3) ainsi qu'un appareil de commande (4), le capteur acoustique (3) étant réalisé pour enregistrer le son d'une chaîne d'entraînement (5) de la bicyclette (2), et l'appareil de commande (4) étant aménagé pour faire la différence, à l'aide d'une comparaison de données de signaux acoustiques du capteur acoustique (3) avec des données de signaux acoustiques prédéfinies, entre un fonctionnement normal de la chaîne d'entraînement (5) et un fonctionnement anormal de la chaîne d'entraînement (5) dans lequel la chaîne d'entraînement (5) est soumise à une usure accrue, dans lequel les données de signaux acoustiques prédéfinies comprennent au moins une propriété caractéristique de données de signaux acoustiques du type qui ont été enregistrées au moyen du capteur acoustique (3) lors d'un fonctionnement anormal de la chaîne d'entraînement (5), dans lequel les propriétés caractéristiques sont des coefficients cepstraux de fréquence Mel.

2. Système de détection (1) d'une bicyclette (2) selon la revendication 1, **caractérisé en ce que** dans l'appareil de commande (4), plusieurs ensembles de données de signaux acoustiques prédéfinies sont mémorisés dans une base de données et/ou une table de recherche, chaque ensemble de données de signaux acoustiques prédéfinies correspondant à un état différent de la chaîne d'entraînement (5) qui conduit à un fonctionnement anormal.

3. Système de détection (1) d'une bicyclette (2) selon l'une quelconque des revendications précédentes, **caractérisé en ce que** le capteur acoustique (3) présente une liaison avec ou sans fil avec l'appareil de commande (4) pour la transmission de données et/ou l'alimentation en énergie.

4. Système de détection (1) d'une bicyclette (2) selon l'une quelconque des revendications précédentes, **caractérisé en ce que** le capteur acoustique (3) est un capteur de bruit de structure.

5. Bicyclette (2), comprenant un système de détection (1) selon l'une quelconque des revendications précédentes, dans laquelle le capteur acoustique (2) est installé sur un dispositif de pédale (8), en particulier sur un moyeu (10) du dispositif de pédale (8) ou sur un cadre (11) de la bicyclette (2).

6. Bicyclette (2) selon la revendication 5, **caractérisée par** une cassette de pignons arrière (7) disposée sur une roue arrière (6) de la bicyclette et dotée d'au moins un pignon (7a) et/ou par un agencement de pignons avant (9) disposé sur un dispositif de pédale (8) et doté d'au moins un pignon (9a), dans laquelle la chaîne d'entraînement (5) s'étend entre un pignon arrière (7a) de la cassette de pignons arrière (7) et un pignon avant (9a) de l'agencement de pignons avant (9), et dans laquelle le fonctionnement anormal comprend un état de la chaîne d'entraînement (5) dans lequel la chaîne d'entraînement (5) s'étend entre un pignon avant (9a) et un pignon arrière (7a) du type qui présente dans la direction transversale (100) de la bicyclette (2) une distance (200) qui se situe au-dessus d'une valeur limite prédéfinie.

7. Bicyclette (2) selon la revendication 6, **caractérisée en ce que** l'appareil de commande (4) est aménagé pour procéder à une mise en prise de changement de vitesse afin de faire passer la chaîne d'entraînement (5) sur un pignon avant (9a) et/ou un pignon arrière (7a) du type qui diminue la distance (200) dans la direction transversale (100).

8. Bicyclette (2) selon l'une quelconque des revendications 5 à 7, **caractérisée en ce que** le fonctionnement anormal comprend un état de la chaîne d'entraînement (5) dans lequel une lubrification de la chaîne d'entraînement (5) se situe au-dessous d'un degré prédéfini et/ou un encrassement de la chaîne d'entraînement (5) se situe au-dessus d'un degré prédéfini.

9. Bicyclette (2) selon l'une quelconque des revendications 5 à 8, **caractérisée par** un dispositif de sortie (12), l'appareil de commande (4) étant aménagé pour émettre une alarme optique et/ou haptique et/ou acoustique lorsqu'un fonctionnement anormal est détecté.
